(19) Europäisches Patentamt
European Patent Office
Office européen des brevets

(11) **EP 4 375 304 A1**

(12) **EUROPEAN PATENT APPLICATION**

(43) Date of publication:
**29.05.2024  Bulletin 2024/22**

(21) Application number: **22383141.3**

(22) Date of filing: **28.11.2022**

(51) International Patent Classification (IPC):
**C08F 210/02** (2006.01)    **C08F 210/16** (2006.01)
**C08F 2/02** (2006.01)

(52) Cooperative Patent Classification (CPC):
(C-Sets available)
**C08F 210/02; C08F 2/02; C08F 210/16;**
C08F 2400/04                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **INTERNATIONAL TECHNICAL
EXCELLENCE CENTERS, LLC**
**Baton Rouge, LA 70816 (US)**

(72) Inventor: **FLORES, Joaquin**
**28009 MADRID (ES)**

(74) Representative: **ZBM Patents - Zea, Barlocci &
Markvardsen**
**Rambla Catalunya, 123**
**08008 Barcelona (ES)**

(54) **PROCESS FOR PRODUCING ETHYLENE COPOLYMERS AT HIGH PRESSURE IN A TUBULAR REACTOR**

(57)    It is provided a process for producing an ethylene copolymer in a tubular reactor comprising: a) compressing ethylene monomer to a certain pressure; b) adding a fresh comonomer in liquid form to a diverted portion of the compressed ethylene to obtain a compressed ethylene/fresh comonomer mixture; c) introducing the remaining compressed ethylene into the preheating section of the tubular reactor and adding a free radical initiator at a first reaction zone; d) introducing the compressed ethylene/fresh comonomer mixture into the tubular reactor through at least one side stream downstream the first reaction zone; e) adding a free radical initiator with each ethylene/fresh comonomer mixture side stream; and f) separating the obtained ethylene copolymer; wherein the compressed ethylene/fresh comonomer mixture is introduced into the tubular reactor at a temperature from -20 °C to 70 °C

Fig. 3

(52) Cooperative Patent Classification (CPC): (Cont.)

C-Sets
**C08F 210/02, C08F 2/00;**
**C08F 210/02, C08F 2/001;**
**C08F 210/02, C08F 2/01;**
**C08F 210/16, C08F 220/1804, C08F 2500/04,**
**C08F 2500/12;**
**C08F 210/16, C08F 220/1804, C08F 2500/12**

**Description**

**Technical Field**

This present disclosure relates to the field of polymer chemistry. In particular, it relates to a process for the manufacturing of ethylene copolymers at high pressure using a specific tubular reactor specification and high-pressure liquid injection of comonomers and modifiers at specific conditions.

**Background Art**

High-pressure reactor polymerization plants convert relatively low-cost ethylene, optionally in combination with one or more comonomers, such vinyl acetate, acrylates, dienes and even acid comonomers, into valuable polyolefins products. The polymerization takes place at relatively medium to high temperatures and high pressures and is highly exothermic. The resulting polymer is a variety of highly value polymers used in multiple applications like film, extrusion coating, wire and cable, hot melt, and solar film applications among others.

It is generally known to control the comonomer content and the polymer molecular weight by adding a co-monomer and a modifier in the suction of the secondary compressor and feed the resultant components to the reactor. However, adding a comonomer and a modifier in the suction of the secondary compressor increases fouling, reduces reliability, and increases the risk of process safety incidents, as described at WO 2021250054. This negative impact increases when a) comonomer reactivity increases, and b) comonomer concentration increases.

It is generally known as well the use of autoclave reactor configurations to produce ethylene copolymers. Other configurations include the use of tubular reactors and the use of autoclave-tube reactor configurations. In general, autoclave reactor configurations have benefits over tubular configuration when high comonomer content incorporations are required or comonomer exhibit a very high reactivity versus ethylene. However, certain tubular reactor configurations, either alone or when used as a tail of an autoclave reactor, can get polymers of similar comonomer content and other polymer characteristics.

The negative impact of adding a co-monomer in the suction of the secondary compressor to the autoclave reactor motor reliability and top bearing supported by the rotating agitator was also described at WO2021250054. When using a tubular reactor configuration, an added negative impact is the increased fouling to the preheating section of a tubular reactor. Preheating is used to raise the ethylene/comonomer mixture from the secondary compressor discharge temperature to the required initiation temperature, typically in the range from 140 C to 180 C. This is accomplished by heating contents with hot water and/or steam circuits through a jacketing system, heating the reactor tube walls. The presence of high reactive comonomers increases fouling due to thermal polymerization at the tube inside wall, mainly of the comonomer, where the highest temperature is reached. The addition of inhibitor typically is not solving the problem as the efficiency of the inhibitor reduces significantly at the preheating temperatures. That increased fouling has three main negative effects:

- Increases the contamination of polymer, as the material produced tends to be very high Mw.
- Decreases the unit reliability due to frequent stops for cleaning.
- Reduces the productivity of the unit do to lower initiator efficiency as initiation temperature is reduced when increasing fouling.

This is partially resolved as described at EP2636691A, where fresh comonomer is added after the preheating section to an ethylene stream which is all introduced into the first reaction zone at temperatures above 165 °C. However, there exits other tubular reactor configurations which utilizes at least one side stream, where only a portion of the compressed ethylene is fed to the preheating section, and that exhibit the benefits of higher conversion rate and/or narrower Molecular Weight Distribution. These configurations are designed to operate with lower initiation temperature as well, being as low as 140 °C. Examples of these processes are described at patents EP3109262A1, EP3168237A1, EP3168238A1, EP3168239A1, EP3260472A1 and EP3260473A1 for homopolymer production. When utilizing those reaction configurations to produce high-pressure copolymers, especially when utilizing high reactive comonomers, EP2636691A does not provide a solution, as a significant portion of the compressed mixture introduced via side stream will not contain fresh comonomer. Simultaneously, it does not provide a solution when initiation temperatures are below 165 °C.

There is, therefore, a need for an enhanced tubular reactor process for producing polyethylene copolymers that results in a higher reliability, while providing higher conversions and lower contamination due to fouling at different critical units.

## Summary of Invention

Inventor has developed a new configuration of tubular reactor, reaction conditions, flow split distribution of ethylene mixture, and comonomer injection that, when operating at a pressure equal to or greater than 150 MPa, results in the production of a broad range of copolymer products, with the elimination of the problems associated with fouling, especially when using high reactive comonomers. This process is particularly applicable to those tubular reactor configurations that utilizes at least one ethylene side stream entry, and initiate reaction at temperatures in the range of 130 °C to 150 °C.

Particularly, the inventors have found that, when carrying out an ethylene and comonomer polymerization reaction in a tubular reactor, by adding directly a fresh comonomer in liquid form at a certain pressure into a diverted compressed ethylene monomer stream for side stream addition, particularly at a relatively low temperature to prevent thermal polymerization, and following with an immediate quenching of the mixture, thermal polymerization inside the secondary compressor and fouling both in the secondary compressor intercoolers and in the preheating section of the tubular reactor are highly reduced. Additionally, an increased conversion and production compared with the processes of the prior art are obtained.

Thus, an aspect of the present disclosure relates to a process for producing an ethylene copolymer in a tubular reactor (6) comprising a preheating section (6a), a first reaction zone (6b) positioned downstream from the preheating section, and at least one more reaction zone positioned downstream from the first reaction zone, the process comprising:

   a) compressing ethylene monomer in one or more compressors (3, 5) to a pressure equal or greater than 150 MPa, such as from 200 MPa to 360 MPa, to obtain a compressed ethylene monomer;

   b) diverting a first portion of the compressed ethylene monomer and adding thereto a fresh comonomer in liquid form at a pressure equal to or greater than 150 MPa, such as from 150 MPa to 360 MPa, to obtain a compressed ethylene/fresh comonomer mixture;

   c) introducing the remaining portion of compressed ethylene monomer, i.e., the portion not mixed with the fresh comonomer, into the preheating section of the tubular reactor, and adding a first free radical initiator cocktail at the first reaction zone to initiate a polymerization reaction;

   d) introducing the compressed ethylene/fresh comonomer mixture from step b) into the tubular reactor through at least one side stream downstream the first reaction zone;

   e) adding a second free radical initiator cocktail into the at least one more reaction zone positioned downstream from the first reaction zone or into each ethylene/fresh comonomer mixture side stream to reinitiate the polymerization reaction; and

   f) separating the obtained ethylene copolymer from the reaction mixture;

   wherein the tubular reactor has a reaction zone after each ethylene/fresh comonomer mixture side stream; and

   wherein the compressed ethylene/fresh comonomer mixture is introduced into the tubular reactor at a temperature from -20 °C to 70 °C.

Therefore, in the process of the present disclosure, no fresh comonomer is fed into the preheating section of the tubular reactor.

Advantageously, summarizing, the process of the present disclosure:

-   prevents from process safety and reliability incidents, mainly at the secondary compressor section;

-   prevents from or minimizes fouling at the secondary compressor intercoolers and at the reactor preheater, avoiding subsequent stops for cleaning and reducing maintenance costs; and

-   simultaneously, allows the operation of a broader range of products, and improves the efficiency (capacity) of the high-pressure process when producing ethylene copolymers.

**Brief Description of Drawings**

Fig. 1 shows schematically an ethylene polymerization plant wherein the reactor 6 is a tubular reactor.

Fig. 2 shows schematically critical design considerations when injecting comonomers in liquid form at a pressure equal to or greater than 120 MPa.

Figure 3 shows schematically a tubular reactor arrangement, wherein: 5 is a secondary compressor; 6 is a tubular reactor; 6a is a preheating section; 6b is a first reaction zone; 8 represents a fresh comonomer injection (one or more than one); and 16 represents a quenching device (one or more than one; in this example, a cooling section 16a and a quenching device 16b itself are depicted).

**Detailed description of the invention**

All terms as used herein in this application, unless otherwise stated, shall be understood in their ordinary meaning as known in the art. Other more specific definitions terms as used in the present application are as set forth below and are intended to apply uniformly throughout the specification and claims unless an otherwise expressly set out definition provides a broader definition.

The term "comonomer", as used herein, refers to a compound present in the reaction mixture in a controlled quantity and that reacts with ethylene monomer in a co-polymerization reaction.

The term "fresh" concerning to the comonomer, as used herein, refers to the compound, i.e. the comonomer, added from a source outside of the polymerization flow back to the reactor, i.e. not provide internally from a recycled source.

The term "recycle stream", as used herein, refers to recycle component(s) that are separated from the polymer after exiting a reactor, and are fed, after re-pressurization, to one or more reaction zones, at the inlet to each reaction zone.

The term "polymer", as used herein, refers to a compound prepared by polymerizing monomers, whether of the same or a different type. The generic term polymer thus embraces the term homopolymer (employed to refer to polymers prepared from only one type of monomer), and the term copolymer as defined hereinafter. Trace amounts of impurities can be incorporated into and/or within the polymer structure.

The term "copolymer", as used herein, refers to polymers prepared by the polymerization of ethylene and one or more comonomers.

The term "ethylene-based polymers", as used herein, refers to polymers comprising a majority amount of polymerized ethylene (based on the weight of the polymer), particularly more than 50 wt.% ethylene monomer and one or more comonomers

The term "reactor configuration", as used herein, refers to the devices used to polymerize monomers in order to obtain a polymer or copolymer

The term "tubular reactor", as used herein, refers to a particular reactor configuration where reaction takes place inside a long tube, that length can go from 100 m to 5,000 m or more.

The term "first reaction zone", as used herein, refers to the part of the reactor reaching from the position in the reactor where the reaction mixture first comes in contact with the free-radical initiator at a first free-radical initiator inlet, to the position in the reactor of a second free-radical initiator inlet. Each subsequent reaction zone refers to the part of the reactor reaching from the position in the reactor where a reaction mixture comes into contact with a free-radical initiator at a free-radical initiator inlet in the mentioned zone, to the position in the reactor of a subsequent free-radical initiator inlet.

The term "ethylene side stream", as used herein, refers to a particular configuration where a portion of the compressed ethylene, with or without fresh comonomer, is introduced into the tubular reactor at different points through the length of the reactor.

The term, "high reactive comonomers", as used herein, refers to those comonomers exhibiting a reactivity towards propagation higher than ethylene. Examples are:

- Acrylates like methyl acrylate (MA), ethyl acrylate (EA), butyl acrylate (BA), hexyl acrylate (HA), methyl methacrylate (MMA), glycidyl methacrylate (GMA), n-butyl methacrylate, 2-ethylhexyl methacrylate, hydroxyethyl methacrylate, etc.
- Acid copolymers like methacrylic acid (MAA), acrylic acid (AA), maleic acid, maleic anhydride (MAH), etc.
- Silane like vinyl trimethoxy silane, vinyl triethoxy silane, vinyltrimethylsilane, etc.
- Dienes like 1,7-octadiene (OD), 1,9-decadiene (DD), etc.

Although the vinyl acetate monomer does not exhibit the same level of benefits as those with high reactive comonomers, it can be used in the method of production described by the present disclosure as well.

The term "downstream", as used herein, refers to a point in a polymerization process (for example, an apparatus or stream) that comes after a point of reference (for example, a reactor).

The term "upstream", as used herein, refers to a point in a polymerization process (for example, an apparatus or stream) that comes before a point of reference.

The term "process stream", as used herein, refers to composition comprising one or more reactants coming into a reactor, or a composition comprising polymer coming from a reactor.

The term "compressed ethylene monomer", as used herein, refers to ethylene compressed by secondary compressor to a pressure equal to or greater than 150 MPa, where ethylene is the majority component, and may include other components included in the "recycle stream".

The term "compressed ethylene/comonomer mixture", as used herein, refers to the resultant mixture of mixing the "compressed ethylene monomer" stream with "fresh comonomer" added in liquid from at a pressure greater than 150 MPa.

The term "compressed reaction mixture", as used herein, refers to the resultant mixture of the "compressed ethylene/comonomer mixture" stream with "fresh modifier" added in liquid from at a pressure greater than 150 MPa.

The term "modifier", as used herein, refers to a compound present in the reaction mixture at a controlled quantity to the process to control the molecular weight and the melt flow index (MFI)of a produced polymer.

The term "initiator", as used herein, refers to a compound added to the process to initiate the free radical polymerization process.

The term "molecular weight distribution", as used herein, refers to the distribution between the number of molecules of each polymer species ($N_i$) and the molecular weight of that species ($M_i$).

The term $M_w/M_n$ (also know as polydispersity index) refers to the ration of weight average molecular weight ($M_w$) to number average molecular weight ($M_n$), i.e. ($M_w/M_n$). $M_n$ and $M_w$ are determined as follow:

$$M_n = \frac{\sum M_i N_i}{\sum N_i}, \quad M_w = \frac{\sum M_i^2 N_i}{\sum M_i N_i}$$

where, $N_i$ is the number of molecules having molecular weight $N_i$ in a given polymer sample.

It is noted that, as used in this specification and the appended claims, the singular forms "a", "an", and "the" include plural referents unless the context clearly indicates otherwise. Thus, the indefinite articles "a" and "an" are synonymous with "at least one" or "one or more".

As mentioned above, the present disclosure relates to a process for producing an ethylene copolymer comprising compressing ethylene monomer to a pressure equal to or greater than 150 MPa; introducing a portion of the compressed ethylene monomer into a preheating section of a tubular reactor; initiating the reaction by the addition of a free radical initiator cocktail in a first reaction zone; adding a fresh comonomer in liquid form to the remainder compressed ethylene monomer stream in order to obtain a compressed ethylene/fresh comonomer mixture; introducing the compressed ethylene/fresh comonomer mixture into the tubular reaction system downstream the first reaction zone through at least one side stream; adding an additional free radical initiator cocktail after each ethylene/fresh comonomer mixture side stream to reinitiate the polymerization reaction; and separating the ethylene and recovering the obtained ethylene comonomer, wherein the process is carried out under the conditions specified above.

In an embodiment of the process of the present disclosure, the compressed ethylene monomer is discharged from a secondary compressor and is free of fresh comonomer, and the fresh comonomer is added into one or more points located between the secondary compressor discharge and the tubular reactor.

In another embodiment, optionally in combination with one or more features of the embodiments defined above, the process also comprises the addition of a fresh modifier, which can be added either in the suction of the secondary compressor or, together with the fresh comonomer, into one or more points located between the secondary compressor discharge and the tubular reactor. The fresh modifier can be in liquid form and the addition can be made at a pressure equal to or greater than 150 MPa, such as from 150 MPa to 360 MPa.

In another embodiment, optionally in combination with one or more features of the embodiments defined above, the first portion of the compressed ethylene monomer (to which the fresh comonomer will be added) is from 5 wt.% to 95 wt.%, particularly from 25 wt.% to 75 wt.%, of the total compressed ethylene monomer (i.e. the compressed ethylene monomer of step a).

Usually, the free radical initiator cocktail (i.e. the mixture of at least two free radical initiators) comprises at least two organic peroxides. Particularly, the free radical initiator cocktail consists of two or more organic peroxides.

In another embodiment, optionally in combination with one or more features of the embodiments defined above, the temperature range on each reaction zone varies from the initiation to the end of the reaction within a range from 110 °C to 300 °C.

In an embodiment, optionally in combination with one or more features of the embodiments defined above, the initiation temperature in the first reaction zone is from 110 °C to 180 °C. In a particular embodiment, the initiation temperature in the first reaction zone is from 130 °C to 150 °C.

Thus, particularly, in step c), the compressed ethylene monomer in the preheating section is heated to an initiation temperature from 110 °C to 180 °C, more particularly from 130 °C to 150 °C, before adding the free radical initiator at the first reaction zone. Particularly, in the preheating section the compressed ethylene monomer is heated to temperature from 130 °C to 150 °C.

In another embodiment, optionally in combination with one or more features of the embodiments defined above, the free radical initiator cocktail comprises at least two organic peroxides, wherein at least one organic peroxide is a low temperature initiator. Particularly, the free radical initiator cocktail consists of two or more organic peroxides, wherein at least one organic peroxide is a low temperature initiator. As used herein, the term "low temperature initiator" means an organic peroxide having a half-life from 2 s to 0.05 s at the initiation temperature.

In an embodiment, optionally in combination with one or more features of the embodiments defined above, in the reaction zones (that is, among the first reaction zone, the at least one more reaction zone, or both) having the same initiation temperature, the same free radical initiator cocktail, particularly, the same free radical initiator comprising or consisting of at least two organic peroxides as defined herein above or below, can be used.

It is known by those skilled in the art the use of organic peroxide cocktails (i.e. a mixture of at least two organic peroxides) to initiate or reinitiate the reaction in each reaction zone. Therefore, in the process of the present disclosure, a free radical initiator cocktail that comprises or consists of at least two organic peroxides covering the temperature range on each reaction zone, typically in the range from 110 °C to 300 °C, can be used. As used herein, the expression "covering the temperature range on each reaction zone" related to a mixture of organic peroxide free radical initiators means that each organic peroxide provides optimum source of radicals through a narrow temperature range to sustain the reaction, i.e., a particular organic peroxide will have a convenient decomposition rate over a relatively narrow temperature range, and that all combined allows covering the full abovementioned temperature range.

In an embodiment, optionally in combination with one or more features of the embodiments defined above, the free radical initiator cocktail comprises or consists of the combination of two or more organic peroxides, such that the desired temperature range where each component is active (e.g. providing free radicals) is within their 2 seconds half-life time and their 0.05 seconds half-life time. For example, if the desired temperature range on the first reaction zone is from 140 °C to 300 °C, a cocktail with the following free radical initiators will be suitable for the process of the present disclosure:

| CHEMICAL NAME | T (°C) for t ½ = 2 s | T (°C) for t ½ = 0.05 s |
|---|---|---|
| Di(sec-butyl) peroxidedicarbonate | 132 | 185 |
| Tert-butyl peroxypivalate | 148 | 198 |
| 1,1,3,3-Tetramethylbutyl peroxy-2-ethylhexanoate | 172 | 227 |
| Tert-butyl peroxy-3,5,5-trimethylhexanoate | 194 | 247 |
| Di-tert butyl peroxide | 225 | 280 |

In a particular embodiment, the free radical initiator consists of at least two organic peroxides, such that the desired temperature range where each free radical initiator is active (e.g. provide free radicals) is within the 2 seconds half-life time and the 0.05 seconds half-life time of the free radical initiator. Particularly, the free radical initiator can consist of the five radical initiators listed above.

In an advantageous embodiment, the free radical initiator cocktail is a mixture of several organic peroxides comprising a concentration of a low temperature initiator such that a rapid reaction take off is ensured, and the production of high molecular weight material is avoided.

Thus, in another embodiment, optionally in combination with one or more features of the embodiments defined above, the free radical initiator cocktail comprises at least two (or consists of two or more) organic peroxides, wherein at least one organic peroxide is a low temperature initiator, namely has a half-life time at the initiation temperature of up to 2 s at the initiation temperature, and is in an amount greater than 30 % on molar basis of total organic peroxides. In another embodiment, the at least one low temperature initiator cocktail is in an amount greater than 50 % on molar basis of the mixture of organic peroxides. Particularly, the initiation temperature, i.e. the temperature at which the reaction starts, is from 110 °C to 180 °C, preferentially from 130 °C to 150 °C. As an instance, when the initiation temperature is 140 °C, examples of low temperature initiators include, without being limited to:

- 1,1,3,3-tetramethylbutylperoxyneodecanoate (TMBPND),
- di(sec-butyl) peroxide dicarbonate (DBPC), and
- ter-butyl peroxy neodecanoate (TBPND).

Other organic peroxides that can be used in the mixture with the low temperature initiator will be determined by the temperature range from initiation to peak temperature.

Examples of such additional organic peroxides include, without being limited to, tert-butyl per (2-ethyl)hexanoate (TBPEH), tert-butyl perpivalate (TBPPI), tert-butyl peroxy 3,5,5, trimethylhexanoate (TBPIN), 2,2, di-terbutyl peroxybutane (DBPB), di-tert-butyl peroxide (DTBP).

The free radical initiator cocktail can be injected directly in the reactor in form of a solution in a hydrocarbon solvent such as an isododecane at each reaction zone in order to control the reaction temperature efficiently. An equally valid solution is to inject the free radical initiator cocktail, particularly, the mixture of organic peroxides, to the ethylene side stream after the fresh comonomer is mixed with ethylene.

As mentioned above, the fresh comonomer is added in liquid form at a pressure equal to or greater than 150 MPa, such as from 150 MPa to 360 MPa or from 200 MPa to 360 MPa, into one or more ethylene side streams and it can be introduced into the tubular reactor at different locations. Particularly, the fresh comonomer is kept in liquid form by controlling the temperature to prevent both crystallization and thermal polymerization.

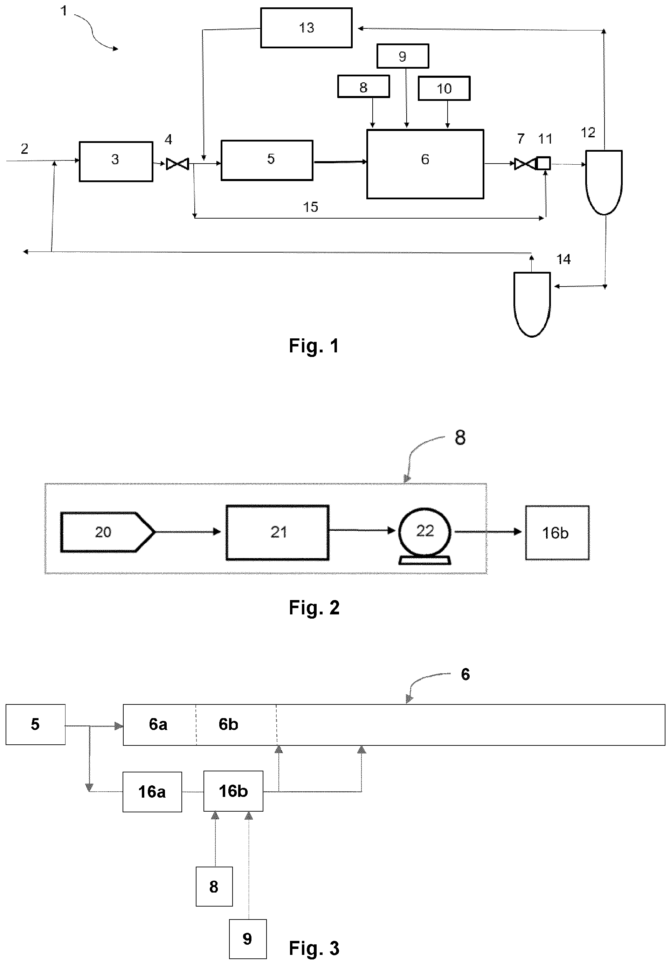

Fig. 1 schematically depicts a polymerization plant 1, including an ethylene feed line 2, which supplies fresh ethylene to a primary compressor 3. The ethylene discharged from the primary compressor 3 flows via conduit 4 having a valve to the secondary compressor 5. A medium pressure recycling system 13 supplies unreacted (recycled) ethylene to secondary compressor 5. The primary compressor 3 may be a single compressor or may be two or more compressors in series or parallel that pressurize the fresh ethylene to the pressure of the ethylene recycle stream (not shown). The ethylene recycle stream may contain some unreacted comonomer and/or unreacted modifier. In some ethylene manufacturing plants, the ethylene discharged from the primary compressor 3 is divided into two streams: (a) one stream being combined with recycle ethylene and fed to the suction of the secondary compressor 5; and (b) another stream 15 injected into the ethylene/polymer mixture downstream of the high-pressure reactor pressure control valve 7. This embodiment provides a rapid cooling of the ethylene/polymer mixture before entering into the product separation unit 12. An alternative is the use of a product cooler (not shown) and gets similar result.

The secondary compressor 5 compresses the ethylene to a pressure of at least 150 MPa for supply to the reactor arrangement 6 (see also Fig. 3 for a detail of 6). The secondary compressor 5 is typically a unit driven by a single motor but may, alternatively, comprise of two or more compressors in series or parallel driven by separate motors (not shown). The scope of the present disclosure includes any configuration of compressors, including the configuration simplified in Fig 1, that compresses the ethylene from the pressure of the ethylene as it leaves the primary compressor 3 to the desired reactor pressure in the range from 150 MPa to 360 MPa.

The injection of liquids to a pressure equal to or greater than 150 MPa, and up to 360 MPa and higher, is known by those skilled in the technology. Double-acting oscillating piston pumps, typically used for initiator, comonomer, and other liquid additions, are available in the market. The use of vertical plunger pumps of similar high-pressure capability and higher volume capacity are also commercially available.

As stated above, the comonomer is injected from station 8 in liquid form at a pressure from 150 MPa to 360 MPa at specific locations between the secondary compressor 5 discharge and the reactor, specifically, into one or more ethylene side streams, and introduced into the tubular reactor at different locations. Particularly, injection of the comonomer is added to the ethylene side streams at a position such the compressed ethylene monomer temperature is below 70 °C, preferably below 40 °C, as can be seen in the detail of Fig. 3. This significantly reduces fouling caused by thermal polymerization (such as at inter-stage coolers of the secondary compressor, second stage discharge piping and tubular reactor preheaters), as well as risk for reactor decomposition. This results in improved lubrication of the packing / plunger system and, as a consequence, in longer packing life at the first and second compression stage cylinders, reduced risk of process safety incident due to plunger breaking failure at any of the cylinders.

In the process of polymerizing ethylene in the tubular reactor 6, once established the desired throughput of ethylene through the secondary compressor 5 and into the reactor 6, the pressure in the reactor can be controlled by the high-pressure control valve 7, through which the product mixture exits the reactor 6. Immediately downstream of the high-pressure control valve 7 there can be a jet pump or "cold gas inlet" device 11, where cold ethylene stream from the primary compressor cools the reaction mixture to the desired temperature. After the high-pressure reactor control valve, the reaction mixture is a phase-separated state.

Product separation may be carried out in one stage separation; however, two or threestage separation is of general practice. For illustration, Fig. 1 includes a two-stage separation system. Upon being cooled, the reaction mixture enters a medium-pressure separator 12, where the first separation of the polymer from unreacted ethylene is carried out. Overhead gas from medium-pressure separator 12 flows into medium-pressure recycle system 13, where the unreacted ethylene is cooled and returned to suction of the secondary compressor 5.

The polymer flows from the bottom of the medium-pressure separator 12 into low-pressure separator 14, separating almost all of the remaining ethylene from the polymer. The remaining ethylene is transferred either to a flare (not shown) or a purification unit (not shown) or is recycled and returned to the primary compressor 3. Molten polymer flows from the bottom of the low-pressure separator 14 to an extruder (not shown) for extrusion, cooling and pelletizing.

Particularly, the inventors have found that, in a process for the manufacture of an ethylene copolymer in a tubular reactor, by adding directly a fresh comonomer in liquid form at a pressure from 150 MPa to 360 MPa into one or more points of the ethylene monomer stream diverted for side stream addition, particularly at a relatively low temperature to prevent thermal polymerization, and following with an immediate quenching with ethylene from the secondary compressor, both thermal polymerization inside the secondary compressor and fouling both in the secondary compressor intercoolers and in the preheating section of the tubular reactor are highly reduced. An advantageous effect has also been observed in the process for the manufacture of ethylene copolymers by adding the compressed ethylene/fresh comonomer mixture via side stream (at a pressure from 150 MPa to 360 MPa) at a relatively low temperature such as -20 °C to 40 °C, as can be seen from the Examples 1 and 2, an increased conversion and production compared with Comparative Example 1 are obtained.

The mentioned effect is especially significant when adding high reactive comonomers such as acrylates or acid comonomers to the ethylene side streams.

In another embodiment, optionally in combination with one or more features of the embodiments defined above, the comonomer can be selected from, without being limited to, the group consisting of:

- acrylates like methyl acrylate (MA), ethyl acrylate (EA), butyl acrylate (BA), hexyl acrylate (HA), methyl methacrylate (MMA), glycidyl methacrylate (GMA), n-butyl methacrylate, 2-ethylhexyl methacrylate, hydroxyethyl methacrylate, and mixtures thereof;
- acid copolymers like methacrylic acid (MAA), acrylic acid (AA), maleic acid, maleic anhydride (MAH), and mixtures thereof;
- silane like vinyl trimethoxy silane, vinyl triethoxy silane, vinyltrimethylsilane, and mixtures thereof; and
- dienes like 1,7-octadiene (OD), 1,9-decadiene (DD), and mixtures thereof.

Other less reactive comonomers like vinyl acetate, propylene, 1-butene, iso-butene, 1-hexene, or 1-octene can get as well some of the benefits described above.

In one embodiment, optionally in combination with one or more features of the embodiments defined above, the comonomer content, in polymerized form, in the ethylene-base copolymer is from 0.1 wt.% to 45 wt.%, or from 1.0 to 40.0 wt.%, or from 2.0 to 35.0 wt.%, or from 3.0 to 30 wt.%, or from 3.0 to 25.0 wt.%, or from 3.0 to 20 wt.%, or from 3.0 to 15 wt.%, or from 3.0 to 10 wt.%, based on the weight of the ethylene-based copolymer.

The modifier involves the termination of growing polymer chains, thus limiting the ultimate molecular weight of the polymer material. By controlling the concentration of the selected modifier, the length of polymer chains, and hence the molecular weight can be controlled. The MFI of a polymer, which is related to the $M_n$, is controlled in the same way. Examples of modifiers include, without being limited to propylene, 1-butene, isobutene, 1-hexene, 1-octene, n-butane, isobutane, methyl ethyl ketone, propionaldehyde, isopropyl alcohol, methanol, ethanol, vinyl ethyl ether, isobutene, and acetic anhydride. Usually, the modifier can be in an amount from 0.05 wt.% to 10 wt.% based on the weight of polymerizable monomers.

Some modifiers such as propylene, 1-butene, isobutene, 1-hexene and 1-octene can also participate in a co-polymerization reaction.

Critical engineering design considerations must be considered when utilizing the reactor configuration of the present disclosure for the injection of high reactive comonomers. These considerations were already detailed at WO2021250054 and are applicable to this reactor configuration as well.

Fig 2 schematically depicts an embodiment of the station 8 of Fig. 1 to add comonomers in liquid form at pressures equal or greater than 150 MPa. As detailed at WO202150054, the configuration arrangement depicted in Fig 2 is of particular importance with very high reactive comonomers. The arrangement consists of a feed line from comonomer storage 20, a heat exchanger 21, a high-pressure pump 22 followed by immediate quenching with ethylene 16b. The heat exchanger 21 contains design elements capable of providing the required temperature at the required pressure to prevent from thermal polymerization of the liquid comonomer during the heating process. This pressure and temperature conditions are given by the freezing/melting point curve of the comonomer used (for details, see Fig. 3 of WO202150054 and the corresponding explanation in the description).

In order to carry out a rapid cooling (quenching) of the liquid fresh comonomer, first, the first portion of the ethylene stream diverted from the at least one compressor, usually from a secondary compressor, is cooled in a cooling section 16a, typically with a cooling tower water or a mid temperature close refrigerated medium, to a temperature in the region of 30 °C to 40 °C. Then, the liquid fresh comonomer is injected into the cooled first portion of the compressed ethylene stream in order to dilute it. After adding the fresh comonomer and, optionally, a fresh modifier, the compressed ethylene/fresh comonomer mixture, optionally containing the fresh modifier, is cooled down in a quenching device 16b. Particularly, the quenching device 16b is designed such that the outlet temperature of the ethylene/fresh comonomer mixture is from -20 °C to 40 °C, or from -10 °C to 20 °C.

In another embodiment, optionally in combination with one or more features of the embodiments defined above, the comonomer is compressed in a high-pressure pump 22 having an outlet from which the compressed comonomer is discharged, and then injected in the main ethylene side stream (i.e. in the portion of the ethylene stream diverted from the at least one compressor, usually from a secondary compressor) at a quenching device 16b, wherein the distance from the outlet of the compressed comonomer from the high-pressure pump to the inlet of the ethylene stream in the quenching device 16b is equal to or below to 300 m, or 200 m or 100 m.

Thus, the fresh comonomer and, optionally, the fresh modifier can be added to the first portion of the ethylene stream diverted from the at least one compressor, usually from a secondary compressor, between a cooling section 16a and a quenching device 16b. In the cooling section 16a, the compressed ethylene monomer stream diverted from the at least one compressor, particularly from a secondary compressor, can be cooled down to a temperature below to 70 °C. In a particular embodiment, the temperature at which the diverted compressed ethylene monomer stream is cooled down is from 10 °C to 60 °C. In another particular embodiment, the temperature at which the diverted compressed ethylene monomer stream is cooled down is from 20 °C to 50 °C, preferably from 20 °C to 40 °C. In another embodiment, the diverted compressed ethylene stream comes from a secondary compressor and is cooled down to a temperature from 10 °C to 60 °C. In a particular embodiment, the diverted compressed ethylene stream comes from a secondary compressor and is cooled down to a temperature below 40 °C, preferably from -20 °C to 40 °C.

The process for injecting comonomers described in the present disclosure provides a broad range of ethylene polymers and copolymers having narrow molecular weight distribution when at least one ethylene side stream is used, while avoid the problems associated with thermal polymerization of comonomers described earlier. These properties make the process of the present disclosure particularly suitable for the preparation of ethylene copolymers as a raw material in the production of different articles of manufacture for multiple applications. Articles can be manufactured by processing the product obtainable by the process of the present disclosure. The articles can be formed by conventional methods known in the art, such as by extrusion.

Therefore, in a further embodiment, the process of the present disclosure further comprises processing the ethylene copolymer into an article of manufacture.

Throughout the description and claims the word "comprise" and variations of the word, are not intended to exclude other technical features, additives, components, or steps. Furthermore, the word "comprise" encompasses the case of "consisting of". The following examples and drawings are provided by way of illustration, and they are not intended to be limiting of the present disclosure. Reference signs related to drawings and placed in parentheses in a claim are solely for attempting to increase the intelligibility of the claim and shall not be construed as limiting the scope of the claim. Furthermore, the present disclosure covers all possible combinations of particular and preferred embodiments described herein.

## Examples

The following experimental data, including molecular weights (expressed as Mn and Mw) and polydispersity index, conversion rate, and production are calculated from modeling based on original samples of comonomer used. They can be measured by gel permeation chromatography (GPC) with refractive index detector, as provided by Waters (model 717 plus Autosampler with a Water 2487 refractive index detector) following ASTM D-6474 method.

The percentage of co-monomers in the polymer is calculated from modeling based on the original samples where a calibrated Fourier-Transformer Infrared (FTIR) spectroscopy method was used, as provided by Fisher (Nicolet). ASTM D-5594 and ASTM D-3594 where used for the determination of comonomer content in the corresponding ethylene copolymer. Alternative is the use of 1H Nuclear Magnetic Resonance (NMR) obtained in a Brucker 500 MHz equipment.

## Comparative Example 1

Table 1 (Comparative Example 1) shows the results for a tubular reactor configuration producing an ethylene butyl acrylate copolymer, wherein all fresh ethylene is introduced into the preheating section up to an initiation temperature of 170 °C. The reaction is initiated at first reaction zone with a peroxide mixture of TBPPI, TBPEH, TBPIN and DTBP. Second and third reaction zones are reinitiated with a mixture of TBPEH and DTBP. The reactor is 1920 m long from the first reaction zone to the reactor exit (let-down valve). In this particular case, the comonomer (butyl acrylate) can be injected either to the suction of the secondary compressor (most common practice) or to the end of the preheating section utilizing high pressure comonomer injection pumps. A two-MFI, ethylene - butyl acrylate copolymer with 20 wt.% BA content was produced according to the parameters indicated in Table 1, where the reactor pressure is 260 MPa and the peak temperatures at the first and subsequent reaction zones are 280 / 280 / 280 °C, respectively. Propylene is used as modifier to control the MFI. Under these conditions, the production is 25.0 Tonnes/h, the Mw/Mn is 9.2 for a 2 gr/10 min MFI resin, and the average polymerization temperature is 231 °C.

Table 1

| | | Comp. Ex. 1 |
|---|---|---|
| Melt Flow Index | g/10 min | 2.0 |
| % Butyl Acrylate | wt.% | 20 |
| Mw/Mn | -- | 9.0 |
| | | |
| Sec Compressor Flow | Tonnes/h | 91 |
| Reactor Inlet Pressure | MPa | 260 |
| % Flow per side stream 1 | % | 0% |
| % Flow per side stream 2 | % | 0% |
| First initiation temp | °C | 170 |
| Peak Temp 1 | °C | 280 |
| Peak Temp 2 | °C | 280 |
| Peak Temp 3 | °C | 280 |
| Avg. Polym Temp | °C | 235 |
| Avg. Polym Pressure | MPa | 231 |
| Conversion Rate | % | 27.6% |
| Production | Tonnes/h | 25.0 |
| 1 Tonne = 1000 kg | | |

**Examples 1 and 2**

Table 2 shows the results of two examples (Examples 1 and 2) wherein ethylene-butyl acrylate copolymer is produced following the process of the present disclosure according to the parameters indicated in the same table.

Example 1 (with a single-side stream) was performed in a reactor of 1600 m long from first reaction zone to the reactor exit (let-down valve). A 30 % of the ethylene flow is introduced at 20 °C through a single side stream with the fresh comonomer as depicted in Figure 3. The remaining 70 % is preheated in the preheating section up to 140 °C. The reaction is initiated at the first reaction zone with a peroxide mixture of TMBPND, TBPPI, TBPEH, and TBPIN, where the concentration of TMBPND exceeded 50 % molar concentration of the peroxide mixture. In the other reaction zones a mixture of TBPEH and DTBP was used. The reactor pressure is 260 MPa and the peak temperatures at the first and subsequent reaction zones are are 230 / 280 / 285 °C. Propylene is used as modifier to control the MFI. Under these conditions, the production is 26.5 Tonnes/h, the Mw/Mn is 6.3 for a 2 gr/10 min MFI resin, and the average polymerization temperature is 214 °C.

Example 2 (with a two-side stream) was performed in a reactor of 1540 m long from first reaction zone to the reactor exit (let-down valve). A 50 % of the ethylene flow is introduced at 20 °C through two side streams with the fresh comonomer as depicted in Figure 3. Both locations are specifically selected to lower the average polymerization temperature. The remaining 50 % is preheated in the preheating section up to 141 °C. The reaction is initiated at the first reaction zone with a peroxide mixture of TMBPND, TBPPI, TBPEH, and TBPIN, where the concentration of TMBPND exceeded 50 % molar concentration of the peroxide mixture. In the other reaction zones a mixture of TMBPND, TBPEH, and DTBP was used. The reactor pressure is 260 MPa and the peak temperatures are 230 / 280 / 285 °C. Propylene is used as modifier to control the MFI. Under these conditions, the production is 26.7 Tonnes/h, the Mw/Mn of 5.8 for a 2 gr/10 min MFI resin, and the Average polymerization temperature of 209 °C.

Table 2

| | | 1-side stream | 2-side stream |
|---|---|---|---|
| | | Example 1 | Example 2 |
| Melt Flow Index | g/10 min | 2.0 | 2.0 |
| % Butyl Acrylate | wt.% | 20 | 20 |
| Mw/Mn | -- | 6.3 | 5.8 |
| | | | |
| Sec Compressor Flow | Tonnes/h | 91 | 91 |
| Reactor Inlet Pressure | MPa | 260 | 260 |
| % Flow per side stream 1 | % | 30% | 20% |
| % Flow per side stream 2 | % | 0% | 30% |
| First initiation temp | °C | 140 | 141 |
| Peak Temp 1 | °C | 230 | 230 |
| Peak Temp 2 | °C | 280 | 280 |
| Peak Temp 3 | °C | 285 | 285 |
| Avg. Polym Temp | °C | 214 | 209 |
| Avg. Polym Pressure | MPa | 241 | 235 |
| Conversion Rate | % | 29.2% | 29.5% |
| Production | Tonnes/h | 26.5 | 26.7 |
| 1 Tonne = 1000 kg. | | | |

**Citation list**

1. WO2021250054
2. EP2636691A
3. EP3109262A1
4. EP3168237A1
5. EP3168238A1
6. EP3168239A1
7. EP3260472A1
8. EP3260473A1
9. ASTM D-6474
10. ASTM D-5594
11. ASTM D-3594

**Clauses**

For reasons of completeness, various aspects of the invention are set out in the following numbered clauses:

Clause 1. A process for producing an ethylene copolymer in a tubular reactor (6) comprising a preheating section (6a), a first reaction zone (6b) positioned downstream from the preheating section, and at least one more reaction zone positioned downstream from the first reaction zone, the process comprising:

a) compressing ethylene monomer in one or more compressors (3, 5) to a pressure equal or greater than 150 MPa to obtain a compressed ethylene monomer;

b) diverting a first portion of the compressed ethylene monomer and adding thereto a fresh comonomer in liquid form at a pressure equal to or greater than 150 MPa, such as from 150 MPa to 360 MPa, to obtain a compressed ethylene/fresh comonomer mixture;

c) introducing the remaining portion of compressed ethylene monomer into the preheating section of the tubular reactor, and adding a first free radical initiator cocktail at the first reaction zone to initiate a polymerization reaction;

d) introducing the compressed ethylene/fresh comonomer mixture from step b), into the tubular reactor through at least one side stream downstream the first reaction zone;

e) adding a second free radical initiator into the at least one more reaction zone positioned downstream from the first reaction zone or into each ethylene/fresh comonomer mixture side stream to reinitiate the polymerization reaction; and

f) separating the obtained ethylene copolymer from the reaction mixture;

wherein the tubular reactor has a reaction zone after each ethylene/fresh comonomer mixture side stream; and

wherein the compressed ethylene/fresh comonomer mixture is introduced into the tubular reactor at a temperature from -20 °C to 70 °C.

Clause 2. The process according to clause 1, wherein the compressed ethylene/fresh comonomer mixture is introduced into the tubular reactor at a temperature from -20 °C to 40 °C

Clause 3. The process according to clause 1, wherein the compressed ethylene/fresh comonomer mixture is introduced into the tubular reactor at a temperature from -10 °C to 20 °C

Clause 4. The process according to clauses 1 to 3, wherein the compressed ethylene monomer is discharged from a secondary compressor (5) and is free of fresh comonomer and the fresh comonomer is added into one or more points located between the secondary compressor discharge and the tubular reactor.

Clause 5. The process according to the clauses 1 to 4, further comprising the addition of a fresh modifier, which can be added either in the suction of the secondary compressor or, together with the fresh comonomer, into one or more points located between the secondary compressor discharge and the tubular reactor.

Clause 6. The process according to clauses 1 to 5, wherein the first portion of the compressed ethylene monomer with fresh comonomer is from 5 wt.% to 95 wt.%, preferably from 25 wt.% to 75 wt.%, of the compressed ethylene monomer.

Clause 7. The process according to any one of clauses 1 to 6, wherein the free radical initiator cocktail comprises a least two organic peroxides.

Clause 8. The process according to any one of clauses 1 to 7, wherein the temperature in each reaction zone varies from the initiation to the end of the reaction within a range of temperatures from 110 °C to 300 °C.

Clause 9. The process according to any one of clauses 1 to 8, wherein the free radical initiator cocktail comprises at least two organic peroxides covering the temperature range on each reaction zone, typically in the range from 110 °C to 300 °C.

Clause 10. The process according to any one of clauses 1 to 8, wherein the free radical initiator cocktail consists of two or more organic peroxides covering the temperature range on each reaction zone, typically in the range from 110 °C to 300 °C.

Clause 11. The process according to any one of clauses 1 to 10, wherein the initiation temperature in the first reaction zone is from 110 °C to 180 °C.

Clause 12. The process according to clause 11, wherein the initiation temperature in the first reaction zone is from 130 °C to 150 °C.

Clause 13. The process according to any one of clauses 11 or 12, wherein the first free radical initiator cocktail comprises at least two organic peroxides, wherein at least one organic peroxide has a half-life from 2 seconds to 0.05 seconds at the initiation temperature.

Clause 14. The process according to any one of clauses 11 or 12, wherein the first free radical initiator cocktail consists of at least two organic peroxides, wherein at least one organic peroxide has a half-life from 2 seconds to 0.05 seconds at the initiation temperature.

Clause 15. The process according to clauses 1 to 13, wherein in the reaction zones having the same initiation temperature, the same free radical initiator cocktail is used.

Clause 16. The process according to any one of clauses 1 to 15, wherein the free radical initiator cocktail comprises two or more organic peroxides, such that the desired temperature range where each free radical initiator is active is within their 2 seconds half-life time and their 0.05 seconds half-life time.

Clause 17. The process according to any one of clauses 1 to 15, wherein the free radical initiator cocktail consists of at least two organic peroxides, such that the desired temperature range where each free radical initiator is active is within their 2 seconds half-life time and their 0.05 seconds half-life time.

Clause 18. The process according to clause 13 to 17, wherein the at least one organic peroxide having a half-life of 2 seconds to 0.05 seconds at the initiation temperature is in an amount greater than 30 % on molar basis of the total organic peroxides added to the first reaction zone.

Clause 19. The process according to clause 18, wherein the at least one organic peroxide is in an amount greater than 50 % on molar basis of the total organic peroxides added to the first reaction zone.

Clause 20. The process according to any one of clauses 1 to 19, wherein, previously to obtaining the compressed ethylene/comonomer, the diverted compressed ethylene monomer stream is cooled down to a temperature below 70 °C.

Clause 21. The process according to clause 20, wherein the temperature at which the diverted compressed ethylene monomer stream is cooled down is from 10 °C to 60 °C.

Clause 22. The process according to clause 20, wherein the temperature at which the diverted compressed ethylene monomer stream is cooled down is from 20 °C to 50 °C.

Clause 23. The process according to clause 20, wherein the temperature at which the diverted compressed ethylene monomer stream is cooled down is from preferably from 20 °C to 40 °C.

Clause 24. The process according to clause 1 to 23, wherein the diverted compressed ethylene stream comes from a secondary compressor (5).

Clause 25. The process according to any one of clauses 1 to 24, wherein the fresh comonomer is subjected to quenching by diluting it with ethylene and to a further reduction of its temperature in a quenching device (16b).

Clause 26. The process according to any one of clauses 1 to 25, wherein the comonomer is compressed in a high-pressure pump (22) having an outlet from which the compressed comonomer is discharged, and then injected in the diverted first portion of the compressed ethylene stream at a quenching device (16b), wherein the distance from the outlet of the high-pressure pump to the inlet of the compressed ethylene monomer stream in the quenching device is equal or below to 300 m, preferentially less than 100 m.

Clause 27. The process according to any one of clauses 1 to 26, wherein the comonomer content is from 0.1 wt % to 45 wt % based on the weight of the ethylene copolymer.

Clause 28. The process according to any one of clauses 1 to 27, further comprising processing the ethylene copolymer into an article of manufacture.

**Claims**

1. A process for producing an ethylene copolymer in a tubular reactor (6) comprising a preheating section (6a), a first reaction zone (6b) positioned downstream from the preheating section, and at least one more reaction zone positioned downstream from the first reaction zone , the process comprising:

   a) compressing ethylene monomer in one or more compressors (3, 5) to a pressure equal or greater than 150 MPa to obtain a compressed ethylene monomer;
   b) diverting a first portion of the compressed ethylene monomer and adding thereto a fresh comonomer in liquid form at a pressure equal to or greater than 150 MPa, such as from 150 MPa to 360 MPa, to obtain a compressed ethylene/fresh comonomer mixture;
   c) introducing the remaining portion of compressed ethylene monomer into the preheating section of the tubular reactor, and adding a first free radical initiator cocktail at the first reaction zone to initiate a polymerization reaction;
   d) introducing the compressed ethylene/fresh comonomer mixture from step b), into the tubular reactor through at least one side stream downstream the first reaction zone;
   e) adding a second free radical initiator cocktail into the at least one more reaction zone positioned downstream from the first reaction zone or into each ethylene/fresh comonomer mixture side stream to reinitiate the polymerization reaction; and
   f) separating the obtained ethylene copolymer from the reaction mixture;
   wherein the tubular reactor has a reaction zone after each ethylene/fresh comonomer mixture side stream; and wherein the compressed ethylene/fresh comonomer mixture is introduced into the tubular reactor at a temperature from -20 °C to 70 °C.

2. The process according to claim 1, wherein the compressed ethylene monomer is discharged from a secondary compressor (5) and is free of fresh comonomer and the fresh comonomer is added into one or more points located between the secondary compressor discharge and the tubular reactor.

3. The process according to claims 1 or 2, wherein the first portion of the compressed ethylene monomer of step b) is from 5 wt.% to 95 wt.%, preferably from 25 wt.% to 75 wt.%, of the total compressed ethylene monomer.

4. The process according to any one of claims 1 to 3, wherein the temperature in each reaction zone varies from the initiation to the end of the reaction within a range of temperatures from 110 °C to 300 °C.

5. The process according to claim 4 wherein the free radical initiator cocktail comprises at least two organic peroxides covering the temperature range on each reaction zone, typically in the range from 110 °C to 300 °C.

6. The process according to any one of claims 1 to 5, wherein the initiation temperature in the first reaction zone is from 110 °C to 180 °C, particularly from 130 °C to 150 °C.

7. The process according to claim 6, wherein the first free radical initiator cocktail in the first reaction zone comprises at least two organic peroxides, wherein at least one organic peroxide has a half-life from 2 seconds to 0.05 seconds at the initiation temperature.

8. The process according to claim 7, wherein the at least one organic peroxide having a half-life from 2 seconds to 0.05 seconds at the initiation temperature is in an amount greater than 30 % on molar basis of the total organic peroxides added to the first reaction zone.

9. The process according to claim 8, wherein the at least one organic peroxide is in an amount greater than 50 % on molar basis of the total organic peroxides added to the first reaction zone.

10. The process according to any one of claims 1 to 9, wherein, previously to obtaining the compressed ethylene/comonomer, the diverted compressed ethylene monomer stream is cooled down to a temperature below 70 °C.

11. The process according to claim 10, wherein the compressed ethylene monomer stream comes from a secondary compressor (5) and is cooled down at a temperature from 20 °C to 40 °C.

12. The process according to any one of claims 1 to 11, wherein the fresh comonomer is subjected to quenching by diluting it with ethylene and to a further reduction of its temperature in a quenching device (16b) to a temperature below 40 °C, preferably from -20 °C to 40 °C, or from -10 °C to 20 °C.

13. The process according to any one of claims 1 to 12, wherein the comonomer is compressed in a high-pressure pump (22) having an outlet from which the compressed comonomer is discharged, and then injected in the diverted first portion of the compressed ethylene stream at a quenching device (16b), wherein the distance from the outlet of the high-pressure pump to the inlet of the compressed ethylene monomer stream in the quenching device is equal or below to 300 m, preferentially less than 100 m.

14. The process according to any one of claims 1 to 13, wherein the comonomer content is from 0.1 wt % to 45 wt % based on the weight of the ethylene copolymer.

15. The process according to any one of claims 1 to 14, further comprising processing the ethylene copolymer into an article of manufacture.

Fig. 1

Fig. 2

Fig. 3

Europäisches
Patentamt

European
Patent Office

Office européen
des brevets

# EUROPEAN SEARCH REPORT

Application Number

EP 22 38 3141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/250054 A1 (INT TECHNICAL EXCELLENCE CENTERS LLC [US]; FLORES JOAQUIN [ES]) 16 December 2021 (2021-12-16) * the whole document * ----- | 1-15 | INV. C08F210/02 C08F210/16 C08F2/02 |
| A | WO 2017/146823 A1 (EXXONMOBIL CHEMICAL PATENTS INC [US]) 31 August 2017 (2017-08-31) * the whole document * ----- | 1-15 | |

TECHNICAL FIELDS
SEARCHED (IPC)

C08F

The present search report has been drawn up for all claims

| Place of search | Date of completion of the search | Examiner |
|---|---|---|
| Munich | 26 April 2023 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3141

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | | Publication date | Patent family member(s) | | Publication date |
|---|---|---|---|---|---|
| WO 2021250054 | A1 | 16-12-2021 | CN 116018356 A | | 25-04-2023 |
| | | | EP 4165093 A1 | | 19-04-2023 |
| | | | WO 2021250054 A1 | | 16-12-2021 |
| WO 2017146823 | A1 | 31-08-2017 | CN 108602043 A | | 28-09-2018 |
| | | | EP 3419751 A1 | | 02-01-2019 |
| | | | KR 20180108719 A | | 04-10-2018 |
| | | | WO 2017146823 A1 | | 31-08-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021250054 A
- EP 2636691 A
- EP 3109262 A1
- EP 3168237 A1
- EP 3168238 A1
- EP 3168239 A1
- EP 3260472 A1
- EP 3260473 A1
- WO 202150054 A